(19) Europäisches Patentamt
European Patent Office
Office européen des brevets

(11) **EP 1 095 084 B1**

(12) # FASCICULE DE BREVET EUROPEEN

(45) Date de publication et mention de la délivrance du brevet:
**19.03.2003 Bulletin 2003/12**

(21) Numéro de dépôt: **99929403.6**

(22) Date de dépôt: **05.07.1999**

(51) Int Cl.$^7$: **C08G 18/69**, H01B 3/30, C08K 3/36, C08G 18/65

(86) Numéro de dépôt international:
**PCT/FR99/01618**

(87) Numéro de publication internationale:
**WO 00/001751 (13.01.2000 Gazette 2000/02)**

(54) **PROCEDE POUR REMPLIR ET ETANCHER DES CONNECTEURS ELECTRIQUES**

VERFAHREN ZUM FÜLLEN UND ABDICHTEN VON ELEKTRISCHEN STECKERN

PROCESS FOR FILLING AND SEALING ELECTRIC CONNECTORS

(84) Etats contractants désignés:
**AT BE CH CY DE DK ES FI FR GB GR IE IT LI LU MC NL PT SE**

(30) Priorité: **06.07.1998 FR 9808597**

(43) Date de publication de la demande:
**02.05.2001 Bulletin 2001/18**

(73) Titulaire: **Atofina**
**92800 Puteaux (FR)**

(72) Inventeurs:
- **DEROCH, Maxime**
  **27300 Bernay (FR)**
- **BONNET, Evelyne**
  **60260 Lamorlaye (FR)**
- **MESLET, David**
  **27300 Bernay (FR)**

(74) Mandataire: **Chaillot, Geneviève et al**
**Cabinet CHAILLOT,**
**16-20, avenue de L'Agent Sarre,**
**B.P. 74**
**92703 Colombes Cédex (FR)**

(56) Documents cités:
**DE-A- 19 513 914**
**US-A- 5 288 796**
**US-A- 5 385 966**

- **DATABASE WPI Section Ch, Week 9313 Derwent Publications Ltd., London, GB; Class A25, AN 93-104336 XP002092405 & JP 05 043651 A (TAOKA CHEM CO LTD), 23 février 1993 (1993-02-23)**
- **DATABASE WPI Section Ch, Week 9109 Derwent Publications Ltd., London, GB; Class A12, AN 91-062747 XP002092406 & JP 03 012473 A (BANDO CHEM IND LTD), 21 janvier 1991 (1991-01-21)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne un procédé utilisant une composition pour remplir et étancher des connecteurs électriques à base d'un polyuréthane formé par la réaction d'un polyisocyanate et d'un polydiène hydroxylé.
Dans le domaine de la Connectique automobile, les fournisseurs travaillent en "juste à temps". Ainsi, les faisceaux de câblage automobile sont fabriqués pour un type de véhicule donné (avec certaines options) juste avant le montage en usine sur le véhicule.
La fabrication des fils électriques et des capots (connecteurs) est automatisée, mais l'assemblage final du faisceau électrique complet est très compliqué et demande encore l'intervention humaine.
Sur la zone d'assemblage se trouvent le faisceau en cours de montage, les capots, les fils électriques qui devront être montés sur le faisceau et un opérateur qui réalise le montage.
En fonction des différentes commandes de véhicules (chacun ayant ses options), un ordre arrive de la part du fabricant d'automobile, et le faisceau correspondant est assemblé.
L'opérateur assemble les fils dans les capots (connections mâles ou femelles) et referme les capots.
Par la suite, ou en cours de production, le faisceau part dans une autre zone dans laquelle est effectué le remplissage d'étanchéité des capots, qui sont remplis par un hot melt. Cette opération est complexe et coûteuse car elle s'effectue en temps réel et demande des manipulations spécifiques, donc des encours de production. De plus, le hot melt se met en oeuvre à chaud ion désigne par hot melt une composition thermoplastique solide en général en dessous de 100 ou 130°C et qui est un liquide visqueux au-dessus.
Un but de l'invention est un procédé utilisant une composition de rhéologie adaptée de sorte:

- qu'on puisse la mettre dans les capots ouverts avant d'y mettre les fils électriques, et qui ensuite ne coule pas quand on les manipule,
- qui ait un temps ouvert (pot life) pouvant être retardé par un stockage à basse température, c'est-à-dire qu'elle ne réticule pas trop vite pour que l'opérateur ait le temps d'y mettre les fils élecriques et de refermer le capot assurant ainsi la fixation des fils électriques et l'étanchéité par l'adhésion de la composition sur le capot et les fils.

Un autre but de l'invention est un procédé utilisant une composition ayant :

- une dureté finale (après réticulation) suffisante pour amortir les vibrations et résister à la déchirure,
- des propriétés diélectriques (isolantes),
- une tenue en températures (normes T2 / T3 automobiles correspondant à des vieillissements de 10 jours à 125°C (T2) ou 155°C (T3),
- éventuellement, une bonne tenue au feu.

La présente invention concerne donc un procédé utilisant une composition comprenant un polyisocyanate, un polydiène hydroxylé et un agent thixotrope, cette composition étant thixotrope pendant le temps ouvert.
US-4 355 130 décrit des mélanges de polyuréthanes et de polyalphaoléfines pour isoler des appareils électriques, US-4 666 968 et US-4 060 583 décrivent des gels de polyuréthane coulables qui réticulent en 24h à 25°C. Il n'est rien précisé sur la thixotropie. US-A 5 385 966 décrit des compositions comprenant un polyisocyanate, un polybutadiène polyol, un agent thixotropique et une charge minérale ; ces compositions sont conservées au froid avant utilisation.
La composition est préparée par mélange de deux parties, l'une contenant le polyisocyanate, l'autre contenant le polydiène hydroxylé. L'agent thixotrope et les autres additifs éventuels sont répartis entre les parties selon leur réactivité et leur compatibilité. Un catalyseur peut être présent dans l'une des deux parties ou être ajouté séparément. Il est bien clair que le temps ouvert est compté depuis le mélange de tous les ingrédients c'est-à-dire des deux parties et du catalyseur éventuel.
Selon la présente invention, le polyisocyanate utilisé peut être un polyisocyanate aromatique, aliphatique ou cycloaliphatique ayant au moins deux fonctions isocyanate dans sa molécule.
A titre d'illustration de polyisocyanate aromatique, on citera le 4,4'-diphényl-méthane diisocyanate (MDI), les MDI modifiés liquides, les MDI polymériques, le 2,4 et le 2,6-toluylène diisocyanate (TDI) ainsi que leur mélange, le xylylène diisocyanate (XDI), le triphénylméthane triisocyanate, le tétraméthylxylylène diisocyanate (TMXDI), le paraphénylène diisocyanate (PPDI), le naphtalène diisocyanate (NDI).
Parmi les polyisocyanates aromatiques, on préfère le 4,4'-diphénylméthane diisocyanate (MDI) et le MDI polymérique (PMDI). On désigne par MDI polymérique un produit de formule

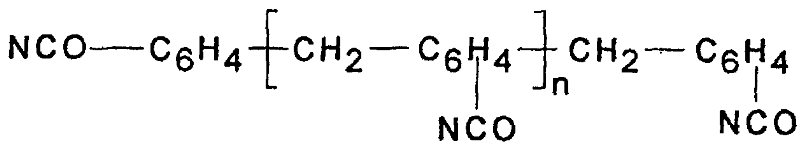

(n° d'enregistrement : CAS (Chemical Abstracts Service) 9016-87-9)

A titre d'illustration de polyisocyanate aliphatique on citera l'hexaméthylène diisocyanate (HDI) et ses dérivés, le triméthylhéxaméthylène diisocyanate.

A titre d'illustration de polyisocyanate cycloaliphatique on citera l'isophorone diisocyanate (IPDI) et ses dérivés, le 4,4'-dicyclohexylméthanediisocyanate et le cyclohexyl diisocyanate (CHDI).

On ne sortirait pas du cadre de l'invention si l'on utilisait des prépolymères d'isocyanates obtenus par réaction d'un polyisocyanate mentionné précédemment avec un polyol tel que notamment polyéther-polyol, polyester-polyol et polydiène-polyol ou avec une polyamine.

Avantageusement les isocyanates sont utilisés en des quantités telles que le rapport molaire NCO/OH est compris entre 0,3 et 2 et, de préférence, voisin de 1.

Le rapport molaire NCO/OH doit être calculé en tenant compte de la présence des fonctions réactives avec les fonctions isocyanates, telles que les fonctions hydroxyles et/ou amines, de l'allongeur de chaîne éventuel.

On préfère le MDI polymérique qui présente de nombreux avantages :

- il donne au produit final des propriétés mécaniques intéressantes,
- sa toxicité est faible (produit nocif par inhalation),

A titre d'illustration de polydiènes-polyols utilisables selon la présente invention, on citera les oligomères de diène conjugué hydroxytéléchélique qui peuvent être obtenus par différents procédés tels que la polymérisation radicalaire de diène conjugué ayant de 4 à 20 atomes de carbone en présence d'un amorceur de polymérisation tel que le peroxyde d'hydrogène ou un composé azoïque tel que l'azobis-2,2'[méthyl-2, N-(hydroxy-2éthyl)propionamide] ou la polymérisation anionique de diène conjugué ayant de 4 à 20 atomes de carbone en présence d'un catalyseur tel que le naphtalène dilithium.

Selon la présente invention, le diène conjugué du polydiène-polyol est choisi dans le groupe comprenant le butadiène, l'isoprène, le chloroprène, le pentadiène-1,3, le cyclopentadiène. La masse molaire moyenne en nombre des polyols utilisables peut varier de 500 à 15 000 et de préférence de 1000 à 3000.

Selon la présente invention, on utilisera de préférence un polydiène-polyol à base de butadiène. Avantageusement, le polydiène glycol comprend 70 à 85 % en mole de préférence 80 % de motifs

$$-(-CH_2-CH=CH-CH_2-)-$$

et 15 à 30 % de préférence 20 % de motifs

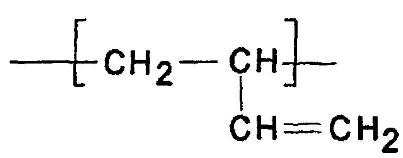

Conviennent également les copolymères de diènes conjugués et de monomères vinylique et acrylique tels que le styrène, l'acrylonitrile.

On ne sortirait pas de l'invention si on utilisait des oligomères hydroxytélécheliques de butadiène époxydés sur la chaîne ou bien encore des oligomères hydrogénés hydroxytélecheliques de diènes conjugués.

Selon la présente invention, les polydiènes-polyols peuvent avoir des masses moléculaires moyennes en nombre au plus égale à 7000 et de préférence comprise entre 1000 et 3000.

L'indice d'OH exprimé en meq/g est compris entre 0,5 et 5, leur viscosité est comprise entre 1000 et 10 000 m.Pa.s.

A titre d'illustration de polydiènes-potyols, on citera les polybutadiènes à terminaisons hydroxylées commercialisés par la Société ELF ATOCHEM S.A. sous les dénominations Poly Bd®R45 HT et Poly Bd®R20 LM.

On peut utiliser des mélanges des composés précédemment mentionnés tels que par exemple des mélanges de polyéthers-polyols et de polydiènes-polyols.

On utilise avantageusement le polybutadiène hydroxylé. Il apporte :

- une bonne hydrophobie du système (résistance à l'humidité et à l'eau, aux acides et aux bases),
- une flexibilité aux basses températures (Tg à moins de -60°C), le produit doit rester flexible et encaisser les vibrations même à -40°C,
- une bonne tenue thermique aux hautes températures (125°C dans une enceinte confinée sans présence d'oxygène)
- de bonnes propriétés diélectriques,
- une bonne adhésion,
- des propriétés élastomériques d'allongement, de dureté sur une large gamme de température.

Le rôle de l'agent thixotrope est de donner à la composition, avant réticulation, un caractère thixotrope (c'est-à-dire la viscosité baisse avec le taux de cisaillement). On entend avantageusement par "thixotrope" le fait que la composition peut être versée dans un becher de 100 $cm^3$ à mi-hauteur qu'on peut ensuite retourner sans que la composition ne quitte le becher. Ainsi le produit :

- ne coule pas lorsqu'il est déposé dans le capot. On obtient une pâte ou un mastic. Ceci évite de manipuler des produits liquides, ce qui serait incompatible avec l'application. Il faut pouvoir refermer le capot sans que du produit ne coule.
- Par contre, la viscosité baisse lors d'un cisaillement, ceci permet
  - une mise en oeuvre plus facile en machine (le produit devient plus liquide, donc se mélange plus facilement),
  - une meilleure répartition du produit lorsque l'on referme le capot (sous ce cisaillement, le produit redevient plus fluide et cela lui permet de venir remplir les espaces vides).

A titre d'exemple d'agent thixotrope on peut citer la silice pyrogénée.

La quantité d'agent thixotrope dépend des propriétés rhéologiques du polyisocyanate, du polydiène hydroxylé et de la présence d'autres charges ; l'homme du métier détermine facilement cette quantité. S'agissant de la silice pyrogénée il suffit de 2 à 10 parties et de préférence 3 à 6 parties pour 100 parties de polydiène hydroxylé si la composition contient aussi des charges minérales telles que du carbonate de calcium (voir plus loin).

Avantageusement la composition comprend un allongeur de chaîne. Il permet entre autres :

- de régler les propriétés mécaniques finales comme la résistance à la déchirure, la dureté,
- et d'ajuster le rapport du mélange polydiène hydroxylé / polyisocyanate et des autres ingrédients de la composition pour être compatible avec une mise en oeuvre sur machine de mélange.

Par allongeur de chaîne, on désigne présentement des composés portant au moins deux fonctions réactives avec les fonctions isocyanates.

Comme exemples de telles fonctions réactives, on citera les fonctions hydroxyle et les fonctions amine.

Selon l'invention, l'allongeur de chaîne peut être choisi parmi les polyols. Leur masse moléculaire peut être comprise entre 62 et 500.

A titre d'illustration de tels composés, on citera l'éthylène glycol, le propylène glycol, le diéthylène glycol, le dipropylène glycol, le 1,4-butanediol, le 1,6-hexanediol, l'hexylène glycol, le 2-éthyl-1,3-hexanediol, le N,N bis(hydroxy-2 propyl)aniline, le 3-méthyl-1,5-pentanediol et le mélange d'au moins deux des composés précités.

On peut également utiliser comme allongeurs de chaîne des polyamines. Leur masse moléculaire peut être comprise entre 60 et 500.

A titre d'illustration de telles polyamines, on citera l'éthylène diamine, la diphényl méthane diamine, l'isophoronediamine, l'hexaméthylenediamine, la diéthyltoluènediamine.

On utilisera au moins une partie en poids d'un ou plusieurs allongeurs de chaîne précités pour 100 parties en poids de polyol mis en oeuvre et, de préférence 5 à 30 parties en poids.

On peut ajouter un catalyseur qui peut être choisi dans le groupe comprenant des amines tertiaires, des imidazoles et des composés organométalliques.

A titre d'illustration d'amines tertiaires, on peut citer le diaza-1,4 bicyclo [2.2.2]octane (DABCO).

A titre d'illustration de composés organométalliques, on peut citer le dibutyldilaurate d'étain, le dibutyldiacétate d'étain.

Les quantités de catalyseur peuvent être comprises entre 0,01 et 5 parties en poids pour 100 parties en poids de polyol.

Avantageusement la composition utilisée dans le procédé de l'invention comprend un produit pour absorber l'eau. Son rôle est d'absorber l'eau présente dans les charges, mais aussi en cours de production dans le but d'éviter la réaction de l'isocyanate avec l'humidité, réaction qui génère des bulles. Ce produit est par exemple un tamis moléculaire.

Sa quantité dépend de son pouvoir absorbant et de l'humidité des charges et du milieu ambiant. Habituellement il suffit de 1 à 5 parties pour 100 parties de polydiène hydroxylé.

La composition utilisée dans le procédé de l'invention peut aussi comprendre une ou plusieurs charges minérales telles que du carbonate de calcium, du Kaolin, de la silice, du Mica, du talc, de l'alumine hydratée, etc...

Le rôle de la charge minérale est de :

- limiter le retrait dimensionnel lors de la réticulation,
- limiter la dilatation thermique du produit,
- baisser le coût matières premières de la formulation,
- augmenter la viscosité de la formulation,
- adapter le rapport de mélange résine / durcisseur,
- colorer la résine pour la rendre opaque,
- donner une résistance au feu.

La quantité de charge minérale dépend des propriétés recherchées. Elle peut être jusqu'à 200 parties et avantageusement 50 à 100 parties de polydiène hydroxylé.

On peut aussi ajouter dans la formulation du polyuréthane (la composition de l'invention), c'est-à-dire dans le mélange des différents ingrédients avant ou au cours de la polymérisation, des promoteurs d'adhésion tels que des silanes fonctionnels c'est-à-dire des produits ayant une extrémité trialcoxysilane et une fonction organique telle qu'aminé, époxy ou vinyl, des agents de couplage tels que des acides ou anhydrides d'acides carboxyliques insaturés et des charges inertes et divers additifs tels que des anti-oxydants, des anti-U.V., des pigments anti-corrosion.

De préférence la composition utilisée dans le procédé de l'invention ne comprend essentiellement pas de plastifiant, c'est-à-dire au plus une quantité telle qu'il n'y ait ni migration ni exsudation.

Ainsi :

- la compatibilité avec les autres matières plastiques en contact avec le polyuréthane telles que le capot etc... est meilleure (le plastifiant a souvent tendance à migrer et polluer les autres matières),
- le vieillissement thermique est amélioré (le plastifiant a tendance à sortir du réseau, d'où une perte de poids et un retrait dimensionnel),

Comme expliqué plus haut, ladite composition s'obtient par mélange à température ambiante (et telle qu'il n'y ait pas réticulation significative, c'est-à-dire qu'elle reste liquide quand on l'agite), de deux parties contenant les divers ingrédients. Il suffit en général d'être en-dessous de 30 ou 40°C.

Chacune de ces parties est stable et peut être conservée plusieurs mois à 25°C. Le mélange des deux parties peut s'effectuer dans tout dispositif conventionnel.

Cette composition présente un temps ouvert suffisant pour qu'on puisse remplir les capots et y disposer les fils électriques, c'est-à-dire qu'elle ne réticule pas de façon significative (elle reste liquide quand on l'agite) au moins 30 minutes et de préférence entre 2 et 4 heures à 25°C. On peut aussi augmenter le temps ouvert en stockant les compositions de l'invention à basse température, par exemple entre -20 et -10°C.

De préférence le temps ouvert To (en heures) après un stockage pendant Ts heures à -13°C de la composition dès qu'elle vient d'être préparée est To (en heures) = 3,8 - 0,0585 x Ts.

La précision de cette formule est de ± 15 minutes. L'utilisation de ladite composition est particulièrement avantageuse.

- le dépôt du produit dans les capots ouverts est réalisé en temps masqué (c'est-à-dire tous les capots sont remplis sur une seule ligne spécifique),
- le produit ne coule pas des capots (thixotropie),
- les capots ouverts remplis de produit sont stockés dans un congélateur, ce qui permet de suffisamment ralentir la cinétique de réticulation pendant une période pouvant aller jusqu'à 3 jours,
- dès la sortie du congélateur, les opérateurs disposent d'au moins une heure (ce qui est cohérent avec le temps de fabrication d'un faisceau électrique automobile) pendant laquelle la résine n'a pas dépassé le temps ouvert (pot life), ce qui permet l'encapsulation des fils et la fermeture des capots, l'opérateur prend les capots pour les

refermer sur les fils et réalise en une fois l'assemblage et l'étanchéité,

- le produit réticule ensuite normalement à température ambiante, et relativement rapidement. La réticulation est achevée en quelques heures.

Une fois le capot refermé la composition réticule dans la journée, c'est-à-dire avant d'être monté sur le véhicule.

Ainsi on peut remplir les capots, puis les stocker au congélateur (température environ -13°C). Le maintien au froid du produit ralentit fortement la réticulation. Ainsi, si le temps ouvert de la résine est d'environ 4 heures juste après le mélange, il reste supérieur à 1 h 15 après un stockage de 45 heures dans le congélateur, comme le montre la formule citée plus haut.

Par la suite, lorsque l'opérateur commence à fabriquer un faisceau, il lui suffit de sortir les capots du congélateur et il dispose d'un temps ouvert supérieur à 1 heure, lui permettant de réaliser la fermeture des capots.

La présente invention concerne aussi les connecteurs remplis avec les compositions utilisées dans le procédé selon l'invention. Elle concerne aussi un procédé de fabrication de faisceaux électriques dont les connecteurs sont remplis comme exposé plus haut.

Exemples

On a préparé une composition de l'invention par mélange de deux parties A et B (les parties sont en poids).

| PARTIE A | |
|---|---|
| Poly Bd R 45 HT | 100 |
| VORANOL RA 100 | 8 |
| Silane A 187 | 2 |
| No air liquide | 2 |
| Aérosil R202 | 4 |
| Siliporite SA 1720 | 3 |
| Omya 90 T | 84,4 |
| **PARTIE B** | |
| NCO/OH | 1.00 |
| DESMODUR VL 50 (% NCO = 32.5) | 20.34 |

dans laquelle les produits ont la signification suivante :

- PolyBd®R45 HT : polybutadiène hydroxylé de $\overline{Mn}$ égale à 2800 (déterminée par chromatographie d'exclusion stérique), présentant un indice d'hydroxyle $I_{OH}$ exprimé en milliéquivalent par gramme (meq/g) égal à environ 0,83, une viscosité en m.Pa.s (cp) à 30°C égale à 5000 et une densité égale à 0,90 ;

    - Voranol RA 100 : désigne un polyether polyol de .$\overline{Mn}$ .:209, de nombre d'hydroxy 530 mg KOH/g, de viscosité 900 à 1 500 m. P.a.s et densité 1,055 à 25 °C

Silane A 187 : désigne un gamma-glucidoxypropyltrimetoxysilane liquide de densité 1,09 à 250 °C et poids moléculaire 236
No air liquide : un agent débullant
Aérosil R202 est une silice pyrogénée (agent thixotrope)
Siliporite SA 1720 est un tamis moléculaire pour absorber l'eau
Omya 90 T désigne du carbonate de calcium de granulométrie (diamètre moyen) 1,1 µm
DESMODUR VL 50 est un polyisocyanate de type MDI.

On a obtenu les propriétés suivantes :

| Propriétés mécaniques | |
|---|---|
| Dureté shore A | 61 |
| Contrainte à la rupture (MPa) | 5.2 (0.5) |
| Module G à 100 % (MPa) | 3.0 (0.1) |
| Allongement à la rupture (%) | 331 (46) |
| Déchirure (N/mm) | 18.9 (2.6) |
| Temps ouvert mesuré sur 100 g à 25°C | 3 h |

Les valeurs entre parenthèses désignent l'écart type.

**Revendications**

1. Procédé de fabrication de faisceaux électriques comprenant des connecteurs dans lequel pendant un temps de manipulation, désigné par temps ouvert To, compris entre 2 et 4 heures à 25°C, on remplit les connecteurs avec une composition thixotrope puis ensuite on y insère les fils électriques et on les referme, ladite composition comprenant un polyisocyanate, un polydiène hydroxylé et un agent thixotrope, cette composition étant thixotropique pendant le temps ouvert, **caractérisé par le fait que**, dès la préparation de la composition, celle-ci est stockée pendant un temps Ts à une température comprise entre -20 et -10°C.

2. Procédé selon la revendication 1, **caractérisé par le fait que** le temps ouvert To (en heures) après un stockage à -13°C pendant Ts heures, est tel que To = 3,8 - 0,0585 x Ts.

3. Procédé selon l'une des revendications 1 et 2, **caractérisé par le fait que** le polydiène hydroxylé est un polybutadiène hydroxylé.

4. Procédé selon l'une quelconque des revendications 1 à 3, **caractérisé par le fait que** l'agent thixotrope est la silice pyrogénée.

5. Procédé selon l'une quelconque des revendications 1 à 3, **caractérisé par le fait que** la quantité d'agent thixotrope est de 2 à 10 parties et de préférence de 3 à 6 parties pour 100 parties de polydiène hydroxylé.

6. Procédé selon l'une quelconque des revendications 1 à 5, **caractérisé par le fait que**, dans la composition, est présent un allongeur de chaîne de masse moyenne comprise entre 60 et 500 en quantité de 5 à 30 parties pour 100 parties de polydiène hydroxylé.

7. Procédé selon l'une quelconque des revendications 1 à 6, **caractérisé par le fait que**, dans la composition, est présent un produit pour absorber l'eau tel qu'un tamis moléculaire.

8. Procédé selon l'une quelconque des revendications 1 à 7, **caractérisé par le fait que**, dans la composition, est présente une charge minérale en quantité jusqu'à 150 parties pour 100 parties de polydiène hydroxylé et de préférence 50 à 100 parties.

9. Procédé selon l'une quelconque des revendications 1 à 8, **caractérisé par le fait que** l'on augmente le temps ouvert en stockant à basse température le connecteur rempli de la composition avant d'y insérer les fils électriques.

10. Connecteurs électriques susceptibles d'être obtenus par le procédé tel que défini à l'une quelconque des revendications 1 à 9.

## Patentansprüche

1. Verfahren zur Herstellung von elektrischen Kabelbäumen mit Verbindern, bei dem man während einer als offene Zeit To bezeichneten Handhabungszeit mit einer Dauer zwischen 2 und 4 Stunden bei 25°C die Verbinder mit einer thixotropen Zusammensetzung füllt und dann die elektrischen Drähte darin einführt und verschließt, wobei die Zusammensetzung ein Polyisocyanat, ein hydroxyliertes Polydien und ein Thixotropiermittel enthält und während der offenen Zeit thixotrop ist, **dadurch gekennzeichnet, daß** man die Zusammensetzung nach ihrer Herstellung über einen Zeitraum Ts bei einer Temperatur zwischen -20 und -10°C aufbewahrt.

2. Verfahren nach Anspruch 1, **dadurch gekennzeichnet, daß** die offene Zeit To (in Stunden) nach Aufbewahrung bei -13°C über einen Zeitraum von Ts Stunden einen Wert von To = 3,8 - 0,0585 x Ts hat.

3. Verfahren nach Anspruch 1 oder 2, **dadurch gekennzeichnet, daß** es sich bei dem hydroxylierten Polydien um ein hydroxyliertes Polybutadien handelt.

4. Verfahren nach einem der Ansprüche 1 bis 3, **dadurch gekennzeichnet, daß** es sich bei dem Thixotropiermittel um pyrogene Kieselsäure handelt.

5. Verfahren nach einem der Ansprüche 1 bis 3, **dadurch gekennzeichnet, daß** sich die Menge an Thixotropiermittel auf 2 bis 10 Teile und vorzugsweise 3 bis 6 Teile pro 100 Teile hydroxyliertes Polydien beläuft.

6. Verfahren nach einem der Ansprüche 1 bis 5, **dadurch gekennzeichnet, daß** in der Zusammensetzung ein Kettenverlängerer mit einem durchschnittlichen Gewicht zwischen 60 und 500 in einer Menge von 5 bis 30 Teilen pro 100 Teile hydroxyliertes Polydien vorliegt.

7. Verfahren nach einem der Ansprüche 1 bis 6, **dadurch gekennzeichnet, daß** in der Zusammensetzung ein Produkt zur Absorption von Wasser, wie ein Molsieb, vorliegt.

8. Verfahren nach einem der Ansprüche 1 bis 7, **dadurch gekennzeichnet, daß** in der Zusammensetzung ein anorganischer Füllstoff in einer Menge von bis zu 150 Teilen pro 100 Teile hydroxyliertes Polydien und vorzugweise in einer Menge von 50 bis 100 Teilen vorliegt.

9. Verfahren nach einem der Ansprüche 1 bis 8, **dadurch gekennzeichnet, daß** man die offene Zeit verlängert, indem man den mit der Zusammensetzung gefüllten Verbinder vor dem Einführen der elektrischen Drähte bei tiefer Temperatur aufbewahrt.

10. Elektrische Verbinder, die nach einem Verfahren nach einem der Ansprüche 1 bis 9 erhältlich sind.

## Claims

1. Method of manufacturing electrical wiring harnesses comprising connectors, in which method, during a handling time, denoted by the open time $T_o$, of between 2 and 4 hours at 25°C, the connectors are filled with a thixotropic compound and then afterwards the electrical wires are inserted into the connectors, which are then closed, the said compound comprising a polyisocyanate, a hydroxylated polydiene and a thixotropic agent, this compound being thixotropic during the open time, **characterized in that**, after the compound has been prepared, it is stored for a time $T_s$ at a temperature of between -20 and -10°C.

2. Method according to Claim 1, **characterized in that** the open time $T_o$ (in hours) after storage at -13°C for $T_s$ hours is such that $T_o = 3.8 - 0.0585T_s$.

3. Method according to either of Claims 1 and 2, **characterized in that** the hydroxylated polydiene is a hydroxylated polybutadiene.

4. Method according to any one of Claims 1 to 3, **characterized in that** the thixotropic agent is pyrogenic silica.

5. Method according to any one of Claims 1 to 3, **characterized in that** the amount of thixotropic agent is from 2 to 10 parts and preferably from 3 to 6 parts per 100 parts of hydroxylated polydiene.

6. Method according to any one of Claims 1 to 5, **characterized in that** a chain extender, of average mass between 60 and 500, is present in the compound in an amount from 5 to 30 parts per 100 parts of hydroxylated polydiene.

7. Method according to any one of Claims 1 to 6, **characterized in that** a product for absorbing water, such as a molecular sieve, is present in the compound.

8. Method according to any one of Claims 1 to 7, **characterized in that** a mineral filler is present in the compound in an amount up to 150 parts, and preferably 50 to 100 parts, per 100 parts of hydroxylated polydiene.

9. Method according to any one of Claims 1 to 8, **characterized in that** the open time is increased by having the connector filled with the compound stored at low temperature before the electrical wires are inserted thereinto.

10. Electrical connectors that can be obtained by the method as defined in any one of Claims 1 to 9.